# EUROPEAN PATENT APPLICATION

(11) **EP 4 571 994 A1**
(43) Date of publication of application: **18.06.2025**
(21) Application number: 23852563.8
(22) Date of filing: 08.08.2023
(51) Int. Cl.: H01M 50/533, H01G 11/78, H01M 50/109, H01M 50/11, H01M 50/148, H01M 50/153, H01M 50/202, H01M 50/50, H01M 50/545, H01M 50/548, H01M 50/56

(54) **ELECTROCHEMICAL ELEMENT**

(30) Priority: 08.08.2022 JP 2022126432
(71) Applicant: Maxell, Ltd., Kyoto 618-8525 (JP)
(72) Inventor: YAMAGUCHI, Koji, Otokuni-gun, Kyoto 618-8525 (JP); SATO, Seiji, Otokuni-gun, Kyoto 618-8525 (JP); FURUKAWA, Kazuki, Otokuni-gun, Kyoto 618-8525 (JP); OTSUKA, Takumi, Otokuni-gun, Kyoto 618-8525 (JP); MASUDA, Shumpei, Otokuni-gun, Kyoto 618-8525 (JP)
(74) Representative: Mewburn Ellis LLP
(86) International application number: PCT/JP2023/028906
(87) International publication number: WO 2024/034601

(57) **Abstract**

An electrochemical device is provided that allows a conductive plate positioned between the power generation element and cap to be easily mounted and that is capable of maintaining a good electrical connection. The electrochemical device 1 includes: a case 10 including a recessed container 11 having a bottom 111 and a side wall 112, and a cap 12 that covers the opening of the recessed container 11; a power generation element 20 including a laminate having an electrode layer 21, an electrode layer 22 and a solid electrolyte layer 23 laminated together and contained in the interior space of the case 11 such that the bottom 111 and electrode layer 21 face each other; and a conductive plate 30 located adjacent to the opening of the recessed container 11 and positioned between the electrode layer 22 and cap 12. The recessed container 11 includes a plurality of insertion holes 115 with openings in the upper end surface of the side wall 112. The conductive plate 30 includes a plurality of elastic locking portions 31 located on edges thereof and corresponding in position to the insertion holes 115. With each elastic locking portion 31 inserted in an insertion hole 115, the tip portion 311 of the elastic locking portion 31 presses a side surface of the insertion hole 115.

## Description

### TECHNICAL FIELD

The present disclosure relates to an electrochemical device with a power generation element sealed in a case.

### BACKGROUND ART

Various conventional batteries have been disclosed with a power generation element housed in the interior space defined by a recessed container and a cap that covers the opening of the recessed container.

JP 2012-69508 A (Patent Document 1) discloses an electrochemical cell with stable electrochemical characteristics. The electrochemical cell includes a hermetic container. The hermetic container includes a base member and a lid member. A housing space is formed between these two members for housing an electrochemical element. An elastic member is positioned between the lid member and electrochemical element to press the electrochemical element. Patent Document 1 discloses a plate spring bent in a V-shape as seen in cross-sectional view to serve as an elastic member, or a diaphragm -shaped spring shaped to have a concave surface that is warped as it goes from the center toward the outer edge.

JP 2010-56067 A (Patent Document 2) discloses a coin-shaped lithium secondary battery including a cell element having a first electrode, a solid electrolyte and a second electrode, the cell element sealed in a container having a metallic case, a metallic seal plate and a gasket present therebetween, the battery further including a conductive elastic body located between the cell element and the metallic case or metallic seal plate. The conductive elastic body is capable of pressing the laminate with a pressure not lower than 0.1 MPa, thus increasing the contact surface pressure between the first and second electrodes and the solid electrolyte. This reduces decrease in current density.

### PRIOR ART DOCUMENTS

### PATENT DOCUMENTS

Patent Document 1: JP 2012-69508 A
Patent Document 2: JP 2010-56067 A

### SUMMARY OF THE INVENTION

In connection with the electrochemical cell of Patent Document 1, in implementations where the elastic member while restricted in position by the lid member presses the electrode assembly, during sealing of the electrochemical cell, the lid member and the base member must be joined together while the lid member is pressing the elastic member. Thus, the lid member receives the reaction force by the elastic member and can easily incline, which may result in non-uniform joining between the lid member and base member. Further, if the elastic member is not fixed to the lid member and/or electrode assembly, the elastic member may be displaced in position during sealing. In implementations where the elastic member (i.e., diaphragm -shaped spring) is locked to the seal ring and/or base member and is separated from the lid member, the dimension from the center to the outer periphery as measured in the height direction (i.e., the overall thickness of the spring) is large and the locking position of the spring is at the outer periphery i.e. the uppermost position in the height direction, which creates a large gap between the lid member and electrochemical element inclusive of the gap between the elastic member and lid member, which could hamper the ability to increase the capacity of an electrochemical cell.

In the coin-shaped lithium secondary battery of Patent Document 2, the metallic case must be crimped while creating an appropriate pressure force on the gasket and so as to push the cell element with a predetermined pressure force or higher by means of the conductive elastic body. However, since the gasket is made of resin, it is difficult to provide a gasket with a thickness that is uniform throughout, making it difficult to create a uniform pressing force on the entire gasket; as such, sealability tends to be low.

In view of this, a problem to be solved by the present disclosure is to provide an electrochemical device capable of maintaining a good electrical connection.

To solve the above-identified problem, the present disclosure provides the following arrangement: An electrochemical device according to the present disclosure includes: a case including a recessed container having a bottom and a side wall, and a cap adapted to cover an opening of the recessed container; a power generation element sealed in the case and including a first electrode layer located adjacent to the bottom, a second electrode layer located adjacent to the cap, and a separation layer located between the first electrode layer and the second electrode layer; and a conductive plate positioned between the power generation element and the cap. The first electrode layer is electrically connected to a first conductive path running from an inside of the case to an outside of the case. The second electrode layer is electrically connected, via the conductive plate, to a second conductive path running from the inside of the case to the outside of the case. The recessed container has an insertion hole with an opening in an upper end surface of the side wall. The conductive plate has an elastic locking portion extending from an edge of the conductive plate to be inserted into the insertion hole to allow the conductive plate to be mounted on the recessed container. The elastic locking portion inserted in the insertion hole presses a side surface of the insertion hole.

An electrochemical device according to the present disclosure is capable of maintaining a good electrical connection.

### BRIEF DESCRIPTION OF THE DRAWINGS

[FIG. 1] FIG. 1 is a cross-sectional view of an electrochemical device according to a first embodiment.
[FIG. 2] FIG. 2 is an external perspective view of the recessed container of the electrochemical device of FIG. 1.
[FIG. 3] FIG. 3 is a plan view of the electrochemical device of FIG. 1, with the cap and conductive plate removed.
[FIG. 4] FIG. 4 is a plan view of the conductive plate of the electrochemical device of FIG. 1.
[FIG. 5] FIG. 5 is an external perspective view of a variation of the conductive plate of the electrochemical device of FIG. 1.
[FIG. 6] FIG. 6 is a cross-sectional view of an electrochemical device according to a second embodiment.
[FIG. 7] FIG. 7 is a cross-sectional view of an electrochemical device according to a third embodiment.
[FIG. 8] FIG. 8 is a cross-sectional view of an electrochemical device according to a fourth embodiment.
[FIG. 9] FIG. 9 is an external perspective view of a recessed container of an electrochemical device of Variation 1.
[FIG. 10] FIG. 10 is an external perspective view of a conductive plate of Variation 2.
[FIG. 11] FIG. 11 is an external perspective view of a recessed container corresponding to the conductive plate shown in FIG. 10.
[FIG. 12] FIG. 12 is an external perspective view of a recessed container of an electrochemical device of Variation 3.
[FIG. 13] FIG. 13 is a cross-sectional view of an electrochemical device of Variation 4.
[FIG. 14] FIG. 14 is an external perspective view of a recessed container of Variation 6.

### EMBODIMENTS FOR CARRYING OUT THE INVENTION

### (Arrangement 1)

An electrochemical device according to an embodiment of the present disclosure may include: a case including a recessed container having a bottom and a side wall, and a cap adapted to cover an opening of the recessed container; a power generation element sealed in the case and including a first electrode layer located adjacent to the bottom, a second electrode layer located adjacent to the cap, and a separation layer located between the first electrode layer and the second electrode layer; and a conductive plate positioned between the power generation element and the cap. The first electrode layer may be electrically connected to a first conductive path running from an inside of the case to an outside of the case. The second electrode layer may be electrically connected, via the conductive plate, to a second conductive path running from the inside of the case to the outside of the case. The recessed container may have an insertion hole with an opening in an upper end surface of the side wall. The conductive plate may have an elastic locking portion extending from an edge of the conductive plate to be inserted into the insertion hole to allow the conductive plate to be mounted on the recessed container. The elastic locking portion inserted in the insertion hole may press a side surface of the insertion hole.

Thus, the elastic force of the elastic locking portion is used to fix the conductive plate to the recessed container, thereby maintaining a good electrical connection. The conductive plate can easily be mounted on the recessed container since inserting the elastic locking portion from above the upper end surface of the recessed container into the insertion hole is sufficient.

### (Arrangement 2)

Starting from the electrochemical device of Arrangement 1, the elastic locking portion may have a tip portion sharply bent back to extend in a direction opposite to a direction of insertion into the insertion hole. Thus, the elastic locking portion can easily be inserted into the insertion hole and, at the same time, the tip portion presses a side surface of the insertion hole to fix the conductive plate to the recessed container, thereby maintaining a good electrical connection.

### (Arrangement 3)

Starting from the electrochemical device of Arrangement 1, the elastic locking portion may be shaped as a corrugated sheet. Thus, during insertion of the elastic locking portion into the insertion hole, the curved surfaces of the corrugated-sheet shape are pushed by a side surface of the insertion hole and thus warped to extend in the direction of insertion, and the resulting elastic force is used to press the side surface of the insertion hole. As a result, the conductive plate can easily by fixed to the recessed container 11, thereby maintaining a good electrical connection.

### (Arrangement 4)

Starting from the electrochemical device of Arrangement 1, a clearance may be formed between the conductive plate and the cap. Thus, the cap will not abut the power generation element and, during joining of the cap to the upper end surface of the side wall of the recessed container, will not be affected by variations in the thickness of the power generation element, for example, thereby improving the sealability of the case.

### (Arrangement 5)

An electrochemical device according to another embodiment may include: a case including a recessed container having a bottom and a side wall, and a cap adapted to cover an opening of the recessed container; a flat element sealed in the case and including an exterior member having a first electrode terminal located adjacent to the bottom and a second electrode terminal located adjacent to the cap, and a power generation element encapsulated in an interior of the exterior member and having a first electrode layer, a second electrode layer and a separation layer located between the first electrode layer and the second electrode layer; and a conductive plate positioned between the flat element and the cap. The first electrode terminal may be electrically connected to a first conductive path running from an inside of the case to an outside of the case. The second electrode terminal may be electrically connected, via the conductive plate, to a second conductive path running from the inside of the case to the outside of the case. The recessed container may have an insertion hole with an opening in an upper end surface of the side wall. The conductive plate may have an elastic locking portion extending from an edge of the conductive plate to be inserted into the insertion hole to allow the conductive plate to be mounted on the recessed container. The elastic locking portion inserted in the insertion hole may press a side surface of the insertion hole. Thus, the elastic force of the elastic locking portion is used to fix the conductive plate to the recessed container, thereby maintaining a good electrical connection. Further, the conductive plate can easily be mounted on the recessed container since inserting the elastic locking portion from above the upper end surface of the recessed container into the insertion hole is sufficient.

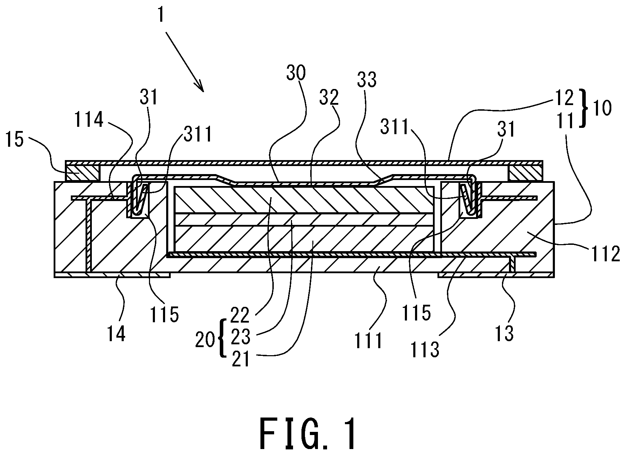

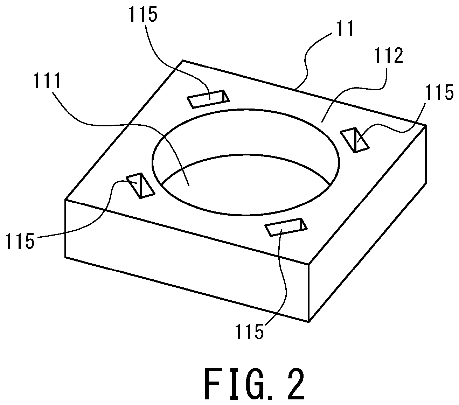

Now, a first embodiment of the present disclosure will be specifically described in connection with exemplary implementations where the electrochemical device is an all-solid-state battery, with reference to FIGS. 1 to 5. First, as shown in FIG. 1, the electrochemical device 1 includes a case 10, a power generation element 20 and a conductive plate 30 housed in the case 10, and an external terminal 13 and an external terminal 14 located on the outer surface of the case 10.

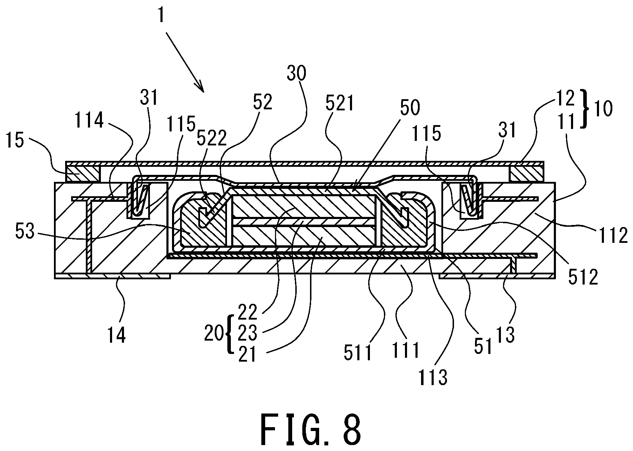

The case 10 includes a recessed container 11 and a cap 12. The recessed container 11 is made of ceramics. The recessed container 11 includes a rectangular bottom 111 and a side wall 112 having the shape of a rectangular tube with a columnar space for housing the power generation element 20, the outer periphery of the bottom 111 and the side wall being continuously formed. As seen in longitudinal cross-sectional view, the side wall 112 extends generally perpendicular to the bottom 111. A conductor 113 is provided inside the bottom 111. The conductor 113 is provided between the power generation element 20 and bottom 111 to extend along them for conductive connection with the power generation element 20, thereby providing a conductive path for the electrode layer 21. A conductor 114 is provided within the side wall 112. As shown in FIG. 1, some portions of the conductor 114 are exposed at the lower surfaces or side surfaces of insertion holes 115, discussed further below, thereby providing a conductive path for the electrode layer 22. A method of manufacturing the recessed container 11 will be described further below. The recessed container 11 is not limited to any particular material, and examples include resin, glass (e.g., borosilicate glass and glass ceramics), metal, ceramics, and various other materials. A composite material with ceramic and/or glass powder dispersed in a resin may also be used. If the recessed container 11 is formed from a metal material, to ensure that the power generation element 20 is insulated from the recessed container 11 or to ensure that a flat element 50 discussed further below (see FIG. 8) is insulated from the recessed container 11, it is preferable that the inner surface of the bottom 111 of the recessed container 11 and the inner circumferential surface of the side wall 112 are coated with an insulator, such as a resin material or glass. Further, the recessed container 11 is not limited to a rectangular shape as seen in plan view, and may be circular, elliptic, or polygonal. The recessed container, having an interior space for housing the power generation element 20, is not limited to a cylindrical shape, and may have the shape of a polygonal tube, such as a quadrangular tube, depending on the shape of the power generation element 20. Alternatively, the conductor 114 may be located on the inner surface of the side wall 112, rather than within the side wall 112, and may further extend through within the bottom 111 to be in conduction with the external terminal 14. In such implementations, to prevent the outer peripheral surface of the power generation element 20 and the conductor 114 from contacting each other, it is preferable that an insulating layer is provided between the outer peripheral surface of the power generation element 20 and the conductor 114, such as on the inner surface of the conductor 114.

The side wall 112 includes insertion holes 115 in the upper end surface of the side wall 112 to allow elastic locking portions 31 of the conductive plate 30, discussed further below, to be inserted therein. Each insertion hole 115 has an opening in the upper end surface of the side wall 112. The insertion holes 115 are not limited to any particular depth, and are only required to have a depth that allows the elastic locking portions 31 to be inserted therein. Further, the dimension of each insertion hole 115 as measured between one side surface and another side surface that faces it is smaller than the associated dimension of the elastic locking portions 31 prior to insertion into the insertion holes 115. Specifically, as discussed further below, each elastic locking portion 31 is inserted into an insertion hole 115 while being deformed to reduce its size and presses, by virtue of its elastic force, the one side surface and the other side surface of the insertion hole 115. In the present embodiment, four insertion holes 115 are provided in the upper end surface of the side wall 112. The number of the insertion holes 115 corresponding in position to the elastic locking portions 31 is equal to the number of the elastic locking portions 31.

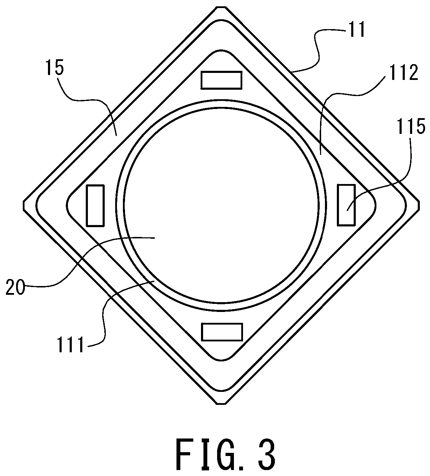

The cap 12 is a rectangular, thin metallic plate covering the opening of the recessed container 11. As shown in FIGS. 1 and 3, the cap 12 is joined (i.e., seam-welded) to the recessed container 11 by a seal ring 15 having the shape of a rectangular frame and positioned between the lower surface of the outer peripheral edge of the cap and the upper end of the recessed container 11. Thus, the interior space of the case 10 is completely hermetic. In view of effects on the power generation element 10, the interior space of the case 10 is preferably a vacuum atmosphere or inert-gas atmosphere, such as nitrogen. The cap 12 is not limited to a thin metallic plate, and is only required to be capable of covering the opening of the recessed container 11. The cap 12 is not limited to a rectangular shape and may be varied depending on the shape of the recessed container 11 as seen in plan view, and may be circular, elliptical or polygonal, for example. Further, the cap 12 may have other shapes than a flat plate. In some implementations, the cap 12 may be bonded to the recessed container 11 with an adhesive, and the joining of the cap 12 to the recessed container 11 is not limited to any particular method and is only required to enable hermetic sealing of the interior space of the case 10.

The external terminal 13 is located on the outer surface of the bottom 111 of the recessed container 11. The external terminal 13 is electrically connected to the electrode layer 21, discussed further below, via the conductor 113. The electrode layer 21 functions as a cathode layer, as discussed below. Thus, the conductor 113 provides a conductive path that provides conduction between the external terminal 13 and cathode layer, and the external terminal 13 functions as a cathode terminal.

The external terminal 14 is located on the outer surface of the bottom 111 of the recessed container 11, separated from the external terminal 13. The external terminal 14 is electrically connected to the elastic locking portions 31 of the conductive plate 30, discussed further below, via the conductor 114. As discussed further below, the conductive plate 30 is electrically connected to the electrode layer 22 which functions as an anode layer. Thus, the conductor 114 provides a conductive path that provides conduction between the external terminal 14 and anode layer, and the conductive plate 30 provides a connection terminal that provides conduction between this conductive path and electrode layer 22, and thus the external terminal 14 functions as an anode terminal. The external terminals 13 and 14 are not limited to the above-described positioning, and may be positioned on the outer surface of the side wall 112 of the recessed container 11; alternatively, the cap 12 may function as the conductor 114 and the external terminal 14 may be provided on the outer surface of the cap 12. Positioning these two terminals on the outer surface of the bottom 111 of the recessed container 11 so as to be separated by a predetermined distance facilitates mounting on the surface of the circuit board.

A method of manufacturing the recessed container 11 will be described below. First, a metal paste is applied to a ceramic greensheet through printing to form a printed pattern that is to provide the conductors 113 and 114. Next, a plurality of such greensheets with printed patterns are laminated and baked. Laminating a plurality of greensheets with different shapes results in the above-described insertion holes 115. In this way, a recessed container 11 is fabricated that contains conductors 113 and 114 and includes insertion holes 115 in the upper end surface of the side wall 112. The manufacturing is not limited to this method, and any method may be used that can form insertion holes 115 in the upper end surface of the side wall 112. The external terminals 13 and 14 may be formed by this printed pattern of metal paste.

The power generation element 20 includes a laminate including an electrode layer (cathode layer) 21, an electrode layer (anode layer) 22 and a solid electrolyte layer 23 laminated together. The solid electrolyte layer 23 is positioned between the electrode layers 21 and 22 to provide a separation layer. In other words, according to the present embodiment, the separation layer is constituted by the solid electrolyte layer 23. The power generation element 20 is columnar in shape. The power generation element 20 is laminated in such a manner that, from adjacent to the bottom 111 of the recessed container 11 (i.e., from the bottom in the drawing), the electrode layer 21, the solid electrolyte layer 23, and the electrode layer 22 are stacked in this order. In other words, the power generation element 20 is positioned such that one end thereof, i.e., the electrode layer 21, is located adjacent to the bottom 111 of the recessed container 11 and the other end, i.e., the electrode layer 22, is located adjacent to the cap 12, and the element is housed in the interior space of the case 10. The power generation element 20 is not limited to a columnar shape, and may be varied to have the shape of a rectangular parallelepiped or a prism, for example. Further, the power generation element 20 may include a plurality of laminates. The plurality of laminates may be stacked upon one another so as to be connected in series.

The electrode layer 21 is a cathode pellet obtained by placing a cathode mixture into a mold with a diameter of 7.45 mm to form it into a columnar shape, the cathode mixture containing a cathode active material constituted by lithium cobalt oxide, a sulfide-based solid electrolyte, and a conductive aid constituted by graphene in the ratio of 65:30:5 by mass. The electrode layer 21 is not limited to any particular cathode active material and only required to be able to function as the cathode layer of the power generation element 20, and may be lithium nickel oxide, lithium manganese oxide, lithium-nickel-cobalt-manganese complex oxide, olivine-type complex oxide, for example, or may be any suitable mixture thereof. The other constituent materials and their proportions are not limited to any particular materials/proportions. The size and shape of the electrode layer 21 are not limited to a columnar shape, and may be varied depending on the size and shape of the electrochemical device 1.

The electrode layer 22 is an anode pellet obtained by forming an anode mixture into a columnar shape, the anode mixture containing an anode active material used in a lithium-ion secondary battery constituted by LTO (Li₄Ti₅O₁₂, i.e., lithium titanate), a sulfide-based solid electrolyte, and graphene in the ratio of 50:40:10 by weight. The electrode layer 22 is not limited to any particular anode active material and only required to be able to function as the anode layer of the power generation element 20, and may be a metallic lithium or a lithium alloy, or a carbon material such as graphite or low-crystallinity carbon, or an oxide such as SiO, for example, or may be any suitable mixture thereof. The other constituent materials and their proportions are not limited to any particular materials/proportions. The size and shape of the electrode layer 22 are not limited to a columnar shape, and may be varied depending on the size and shape of the electrochemical device 1.

The solid electrolyte layer (i.e., separation layer) 23 contains a sulfide-based solid electrolyte. The solid electrolyte layer 23 is columnar in shape. The solid electrolytes contained in the electrode layer 21, electrode layer 22 and solid electrolyte layer 23 are not limited to any particular ones; preferable ones include sulfide-based solid electrolytes, especially argyrodite-type sulfide-based solid electrolytes to provide ion conductivity. If sulfide-based solid electrolytes are used, it is preferable that the surface of the cathode active material is coated with a lithium-ion conductive material such as a niobium oxide to prevent reaction with the cathode active material. The solid electrolytes contained in the solid electrolyte layer 23, electrode layer 21 and electrode layer 22 may be hydride-based solid electrolytes or oxide-based solid electrolytes, for example. The size and shape of the solid electrolyte layer 23 are not limited to a columnar shape, and may be varied depending on the size and shape of the electrochemical device 1.

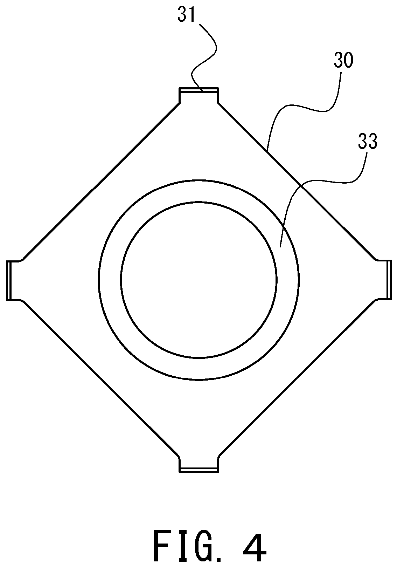

As shown in FIGS. 1 and 4, as seen in plan view, the conductive plate 30 is a metallic plate that is to be placed on the opening of the recessed container 11 of the case 10. The conductive plate 30 includes four elastic locking portions 31 located at edges thereof and corresponding in position to the insertion holes 115. The number of elastic locking portions 31 is not limited to any number, and may be decided depending on the number of insertion holes 115. The conductive plate 30 is not limited to any particular shape as seen in plan view, and may be rectangular, as shown in FIG. 4, or circular in shape. For example, if the conductive plate 30 includes four elastic locking portions 31, the conductive plate 30 may be rectangular as seen in plan view; if the conductive plate 30 includes two elastic locking portions 31, the conductive plate 30 may be circular as seen in plan view. In the present embodiment, each elastic locking portion 31 extends from an edge of the conductive plate 30 toward the associated insertion hole 115 (i.e., downward in FIG. 1). The elastic locking portion 31 includes a tip portion 311 sharply bent back to extend in the direction opposite to the direction in which the elastic locking portion 31 is inserted into the insertion hole 115. The tip portion 311 is bent radially inward. Alternatively, the tip portion 311 may be bent radially outward. As shown in FIG. 1, in a longitudinal cross-sectional view taken along a line in plan view along which a tip portion 311 is bent, the dimension of each insertion hole 115 as measured between one side surface and the other side surface that faces it is smaller than the associated dimension of the elastic locking portions 31 prior to insertion into the insertion holes 115. Thus, each elastic locking portion 31 is inserted into an insertion hole 115 while the bent tip portion 311 is warped so as to be bent further toward the elastic locking portion 31. After insertion into the insertion hole 115, the tip of the tip portion 311 uses its elastic force to press the associated side surface of the insertion hole 115. In this manner, the conductive plate 30 is fixed to the recessed container 11. Thus, in the electrochemical device 1, the conductive plate 30 can easily be mounted on the recessed container 11 since inserting the elastic locking portions 31 into the insertion holes 115 is sufficient. Further, using the elastic forces of the elastic locking portions 31 to fix the conductive plate 30 to the recessed container 11 enables maintaining a good electrical connection. Further, each elastic locking portion 31, when inserted in the associated insertion hole 115, is in contact with the conductor 114, which is exposed in a portion of the lower surface or a side surface of the associated insertion hole. Thus, the conductive plate 30 functions as a current collector and, at the same time, functions as a connection terminal that electrically connects the electrode layer 22 with the conductive path connected to the external terminal 14. The conductive plate 30 covers a portion of the opening of the recessed container 11. The surface area of the conductive plate 30 as measured in plan view is smaller than the surface area of the opening of the recessed container 11.

As shown in FIG. 1, the conductive plate 30 includes a recessed portion recessed toward the associated end of the power generation element, 20, i.e., the electrode layer 22, positioned to contact the upper surface of the electrode layer 22. The planar bottom portion 32 of the recessed portion is flat in shape so as to be able to push the power generation element 20 with a larger area. Further, a stepped portion 33 displaced in the thickness direction is provided to surround the planar bottom portion 32 of the recessed portion. The stepped portion 33 is a peripheral wall represented by a truncated cone with a diameter that gradually decreases toward the power generation element 20. As shown in FIG. 1, the planar bottom portion 32 of the recessed portion faces the electrode layer 22 and is in contact with the upper surface of the electrode layer 22. Thus, the planar bottom portion 32, which has the shape of a flat plane, pushes the electrode layer 22 with a large area to prevent damage to the electrode layer 22 during expansion of the power generation element 20. Furthermore, a larger area of contact between the conductive plate 30 and power generation element 20 is provided to establish a conductive connection between the conductive plate 30 and power generation element 20 in a larger area, thereby maintaining an even better electrical connection. Moreover, providing a stepped portion 33 enables a reduction in the overall thickness of the conductive plate 30. Further, the position of the edge of the conductive plate 30, and thus the elastic locking portions 31, may be freely set along the height direction (i.e., thickness direction of the conductive plate), which will enable preventing the distance between the cap 12 and the planar bottom portion 32 of the conductive plate 30 from increasing even if a clearance is formed between the cap 12 and conductive plate 30. This will enable preventing the gap between the cap 12 and power generation element 20 from increasing, thereby enabling an increase in the capacity of the electrochemical device 1. It will be understood that the thickness direction is shown in FIG. 1 as the top-bottom direction (i.e., the height direction of the electrochemical device 1), and can also be referred to as the direction perpendicular to the planar bottom portion 32 in the drawings.

Examples of metals forming the conductive plate 30 include nickel, iron, copper, chromium, cobalt, titanium, aluminum, and alloys thereof; to facilitate functioning as a plate spring, stainless steels for springs are preferably used, such as SUS301-CSP, SUS304-CSP, SUS316-CSP, SUS420J2-CSP, SUS631-CSP and SUS632J1-CSP.

To ensure that the pressing force of the conductive plate 30 against the power generation element 20 is at a predetermined level or higher, the thickness of the conductive plate is preferably not smaller than 0.05 mm, more preferably not smaller than 0.07 mm, and particularly preferably not smaller than 0.1 mm. On the other hand, to prevent an excessively large thickness of the conductive plate 30 from requiring increased housing capacity of the case 10, and to facilitate deformation of the conductive plate 30 to facilitate locking to the side wall 112, the thickness of the conductive plate 30 is preferably not larger than 0.5 mm, more preferably not larger than 0.4 mm, and particularly preferably not larger than 0.3 mm.

To reduce contact resistance, the area of the planar bottom portion 32 of the conductive plate 30 is preferably not smaller than 10 % of the area, as seen in plan view, of the electrode layer 22 of the power generation element 20 that faces the conductive plate, more preferably not smaller than 30 %, particularly preferably not smaller than 50 %, and most preferably not smaller than 60 %. On the other hand, to reduce the radial gap around the power generation element 20, the area of the planar bottom portion 32 of the conductive plate 30 is preferably not larger than 100 % of the area, as seen in plan view, of the electrode layer 22 of the power generation element 20 that faces the conductive plate, more preferably not larger than 95 %, particularly preferably not larger than 90 %, and most preferably not larger than 85 %. The shape of the planar bottom portion 32 of the conductive plate 30 need not be a completely flat plane, and may be a plane with irregularities, such as an embossed one, to reduce the contact resistance with the power generation element 20.

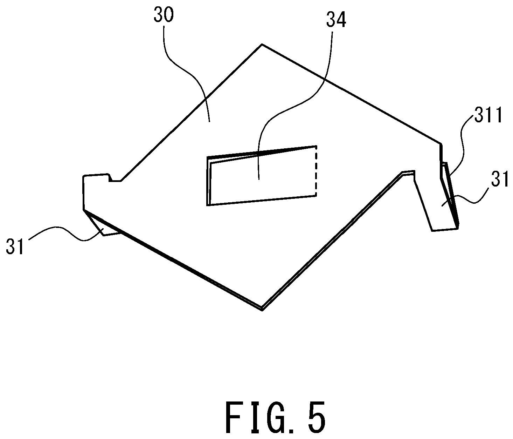

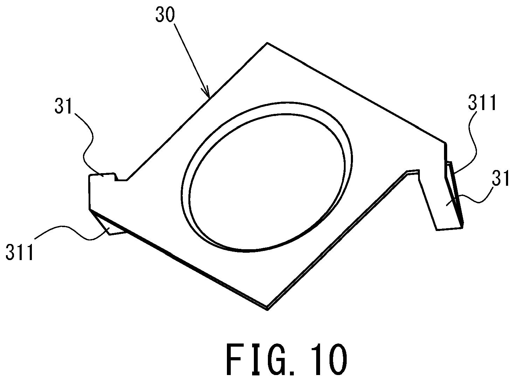

After the power generation element 20 is placed inside the recessed container 11, the conductive plate 30 is laid on the upper surface of the power generation element 20. The elastic locking portions 31 are positioned to correspond in position to the insertion holes 115 as seen in plan view and, thereafter, the elastic locking portions 31 of the conductive plate 30 are pushed into the corresponding insertion holes 115 such that the conductive plate 30 is mounted on and fixed to the recessed container 1. After the planar bottom portion 32 of the conductive plate 30 and the power generation element 20 contact each other, the conductive plate 30 is pushed in further downward. Thus, the conductive plate 30, in contact with the power generation element 20, is slightly warped in a direction away from the electrode layer 20. The conductive plate 30 uses its elastic force to push the power generation element 20 toward the bottom 111 of the recessed container 11. As a result, the conductive plate 30 is in more stable contact with the power generation element 20, thereby maintaining good electrical connection without a positional displacement due to vibration, for example. At this moment, the above-described recessed portion formed in the conductive plate 30 reduces warping of the flat planar bottom portion 32, thereby maintaining better electrical connection. Thus, the conductive plate 30 is not limited to any particular construction, and is only required to have a stepped portion 33 and, with the elastic locking portions 31 inserted in the insertion holes 115, to be able to press the power generation element 20 toward the bottom 111 of the recessed container 11. For example, the conductive plate 30 may have a spring piece 34 that rises from the conductive plate 30 toward the electrode layer 22 of the power generation element 20 so as to contact the upper surface of the electrode layer 22 of the power generation element 20. As shown in FIG. 5, the spring piece 34 may be formed by a U-shaped notch in a portion of the conductive plate 30 in and near the center as seen in plan view, with its tip portion inclined toward the electrode layer 22. The conductive plate 30 of FIG. 5 is a variation of the conductive plate 30 shown in FIG. 10, discussed further below. Thus, the tip portion 311 of each elastic locking portion 31 may be bent in a circumferential direction of the inner circumferential surface of the recessed container 11. The spring piece 34 is not limited to any particular shape, number or location when in place, and is only required to be able to press the power generation element 20 toward the bottom 111 of the recessed container 11.

A clearance is provided between the conductive plate 30 and cap 12. In other words, the conductive plate 30 and cap 12 are not in contact with each other. Thus, when a change in the volume of the power generation element 20 pushes the conductive plate 30 toward the cap 12, the cap 12 is prevented from deforming. Further, the cap 12 and recessed container 11 are welded together with a seal ring 15 provided therebetween, as discussed above. As a clearance is provided between the conductive plate 30 and cap 12, weld heat is prevented from affecting the power generation element 20. Furthermore, since the conductive plate 30 and cap 12 are not in contact with each other, the joining of the cap 12 to the top end surface of the side wall 112 of the recessed container 11 is not affected by a change in the volume of the power generation element 20, thereby further improving the sealability of the case 10.

### (Second Embodiment)

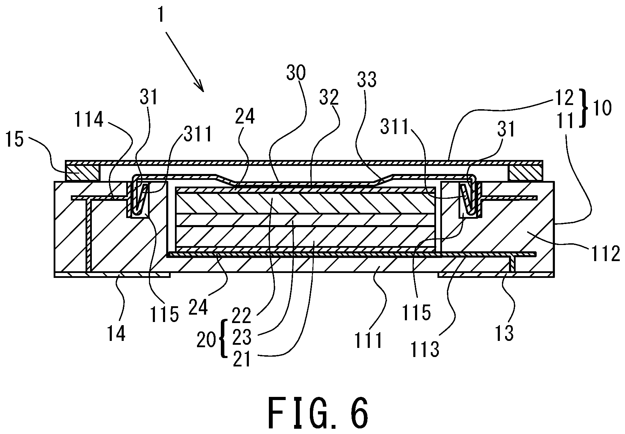

Next, an electrochemical device 1 of a second embodiment will be specifically described with reference to FIG. 6. In connection with the electrochemical device 1 of the present embodiment, the same elements as for the electrochemical device 1 of the first embodiment will basically not be described and only the elements that represent differences from the electrochemical device 1 of the first embodiment will be described.

In the electrochemical device 1 of the present embodiment, the power generation element 20 includes a porous metal layer 24. The porous metal layer 24 is formed on the surface of the electrode layer 22. In other words, the power generation element 20 includes a porous metal layer 24 formed between the electrode layer 22 and conductive plate 30. The porous metal layer 24 is in contact with the planar bottom portion 32 of the conductive plate 30.

The porous metal layer 24, like a porous body of a foamed metal, is a porous metal substrate with high porosity and including empty holes extending therethrough from one side to the other, and can be compressed by pressing and is able to function as a current collector. The porous metal layer 24 coats the surface of the electrode layer 22. To reduce electrical resistance, the porous metal layer 24 is preferably not only in contact with the electrode layer 22 but partially embedded in the anode mixture of the electrode layer 22 to be integrated with the electrode layer 22. It will be understood that, as shown in FIG. 6, a porous metal layer 24 may also be positioned on the surface of the electrode layer 21, below the electrode layer 22 i.e. adjacent to the bottom 111, and this porous metal layer 24 may be partially embedded in the cathode mixture of the electrode layer 21 to be integrated with the electrode layer 21.

To facilitate correction of variations in the thickness of the power generation element 20 due to compression, the porosity of the porous metal layer(s) 24 is preferably not lower than 80 %, and more preferably not lower than 90 %. On the other hand, to ensure that there is a good conduction, the porosity of the porous metal layer(s) 24 is preferably not higher than 99 %. The thickness of the porous metal layer(s) 24 prior to assembly of the electrochemical device 1 is preferably not smaller than 0.1 mm, more preferably not smaller than 0.3 mm, and particularly preferably not smaller than 0.5 mm; on the other hand, the thickness is preferably not larger than 3 mm, more preferably not larger than 2 mm, and particularly preferably not larger than 1.5 mm.

Providing such a porous metal layer 24 will enable sufficiently absorbing variations in the thickness of the power generation element 20 or the height of the case 10, for example, and, as a result, enable reducing variations in internal resistance value. Alternatively, if such a porous metal layer 24 is integrated in advance with the second electrode layer, the electrical resistance at the points of conduction to the planar bottom portion 32 of the conductive plate 30 or between the spring piece and the power generation element 20 will be reduced.

### (Third Embodiment)

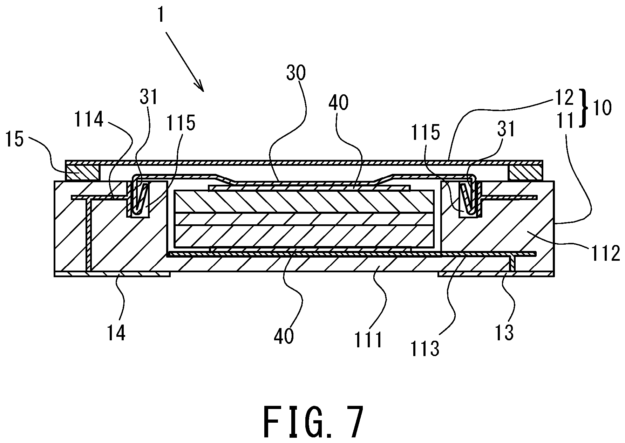

Next, an electrochemical device 1 of a third embodiment will be specifically described with reference to FIG. 7. In connection with the electrochemical device 1 of the present embodiment, the same elements as for the electrochemical device 1 of the first embodiment will basically not be described and only the elements that represent differences from the electrochemical device 1 of the first embodiment will be described.

The electrochemical device 1 of the present embodiment includes a conductive sheet 40 between the electrode layer 22 and conductive plate 30. In the present embodiment, the conductive sheet 40 is a conductive carbon sheet formed from expanded graphite, that is, a graphite sheet. The graphite sheet is produced in the following manner: First, natural graphite is acidized to produce acidized graphite, and its particles are heated. This causes acids present between the layers of the acidized graphite to vaporize to cause the acidized graphite to foam and thus expand. This expanded graphite is formed into a felt shape, and then rolled in a rolling mill with rollers to form a sheet. A circular portion is cut out of this sheet of expanded graphite to produce a conductive sheet 40. As discussed above, expanded graphite is formed by acids in acidized graphite vaporizing such that the acidized graphite foams. Thus, the resulting graphite sheet is porous. As such, the graphite sheet provides not only conductivity, a feature provided by the graphite itself, but also flexibility, a feature not provided by conventional graphite products. The manufacture of the graphite sheet is not limited to this method and the graphite sheet may be formed from materials other than expanded graphite, and may be produced by any method.

The apparent density of the graphite sheet is preferably not lower than 0.3 g/cm³, and more preferably not lower than 0.7 g/cm³; it is preferably not higher than 1.5 g/cm³, and more preferably not higher than 1.3 g/cm³. This is in view of the fact that if the apparent density of the graphite sheet is too low, the graphite sheet can easily be damaged; if the apparent density is too high, flexibility decreases. These ranges of apparent density are not only applicable to a graphite sheet, but also a conductive sheet 40 formed from other materials such as conductive tape.

The thickness of the graphite sheet is preferably not smaller than 0.05 mm, and more preferably not smaller than 0.07 mm; it is preferably not larger than 0.5 mm, and more preferably not larger than 0.2 mm. This is in view of the fact that if the thickness of the graphite sheet is too small, the graphite sheet can easily be damaged; if the thickness is too large, the graphite sheet narrows the interior space of the case 10 that houses the power generation element 20, necessitating a decrease in the capacity (i.e., thickness) of the power generation element 20 that can be housed. These thickness ranges are not only applicable to a graphite sheet, but also a conductive sheet 40 formed from other materials such as conductive tape or metal.

Such a conductive sheet 40 that is more flexible, i.e., more deformable, than the conductive plate 30 allows the pressing force of the conductive plate 30 described above to be conveyed to the power generation element 20 more uniformly, thus preventing damage to the power generation element 20 and also stabilizing electrical connection. As shown in FIG. 7, a conductive sheet 40 may be located between the electrode layer 21 and the bottom 111 of the recessed container 11. This further prevents damage to the power generation element 20 and stabilizes electrical connection.

### (Fourth Embodiment)

Next, an electrochemical device 1 of a fourth embodiment will be specifically described with reference to FIG. 8. In connection with the electrochemical device 1 of the present embodiment, the same elements as for the electrochemical devices 1 of the first and second embodiments will basically not be described and only the elements that represent differences from the electrochemical devices 1 of the first and second embodiments will be described.

The electrochemical device 1 of the present embodiment includes a flat element 50 contained in the interior space of the case 10. As shown in FIG. 8, the flat element 50 includes an exterior can (electrode terminal) 51, a seal can (electrode terminal) 52, such a power generation element 20 as described above, and a gasket 53.

The exterior can 51 includes a circular flat portion 511, and a cylindrical side wall 512 that has the shape of a circular cylinder, the cylindrical side wall and the outer periphery of the flat portion 511 being continuously formed. The cylindrical side wall 512 extends generally perpendicularly to the flat portion 511 as seen in longitudinal cross-sectional view. The exterior can 51 is formed from a metal material, such as stainless steel. The exterior can 51 is positioned adjacent to the bottom 111 of the recessed container 11.

The seal can 52 includes a circular flat portion 521, and a peripheral wall 522 having the shape of a circular cylinder, the peripheral wall and the outer periphery of the flat portion 521 being continuously formed. The opening of the seal can 52 faces the opening of the exterior can 51. The seal can 52 is formed from a metal material, such as stainless steel. The seal can 52 is positioned adjacent to the cap 12. The power generation element 20 is housed between the exterior can 51 and seal can 52. Thus, the exterior can 51 functions as an electrode terminal to be connected to the conductor 113, while the seal can 52 functions as another electrode terminal to be connected to the conductive plate 30.

After the power generation element 20 is placed inside the interior space of the exterior can 51 and seal can 52, the exterior can 51 is crimped onto the seal can 52, with a gasket 53 positioned between the cylindrical side wall 512 of the exterior can and the peripheral wall 522 of the seal can. More specifically, the exterior can 51 and seal can 52 are positioned such that their openings face each other, the peripheral wall 522 of the seal can 52 is inserted inside the cylindrical side wall 512 of the exterior 51 and, with a gasket 53 positioned between the cylindrical side wall 512 and the peripheral wall 522, the exterior can 51 is crimped onto the seal can 52. Thus, the interior space formed by the exterior can 51 and seal can 52 is hermetically sealed. In other words, the exterior can 51 and seal can 52 are exterior members for encapsulating the power generation element 20 in their interior space. Each of the exterior can 51 and seal can 52 is not limited to a circular shape as seen in plan view, and may be varied to be elliptical or polygonal in shape, for example.

The gasket 53 is formed from a resin material such as a polyamide-based resin, a polypropylene resin or a polyphenylenesufide resin. The method of hermetically sealing the interior space defined by the exterior can 51 and seal can 52 is not limited to crimping with a gasket 53 in between, and other methods may be used. For example, the cylindrical side wall 512 of the exterior can 51 and the peripheral wall 522 of the seal can 52 may be joined with a thermofusible resin or an adhesive provided therebetween, and thus sealed.

After the flat element 50 is placed inside the recessed container 11, the conductive plate 30 is laid on the top surface of the flat element 50, and the elastic locking portions 31 are locked to the insertion holes 115 to be fixed thereto. Then, after the planar bottom portion 32 has contacted the flat portion 521 of the seal can 52, the conductive plate 30 is pushed in further downward and is slightly warped in a direction away from the flat element 50. The conductive plate 30 uses its elastic force to press the flat element 50 toward the bottom 111 of the recessed container 11. This allows the conductive plate 30 to be in more stable contact with the flat element 50 and, similarly to the electrochemical device 1 of the first embodiment described above, maintains good electrical connection without a positional displacement due to vibration, for example.

Although not shown, in the electrochemical device 1 of the present embodiment, too, such a porous metal layer 24 or conductive sheet 40 as discussed above may be provided between the flat element 50 and conductive plate 30. Further, a porous metal layer 24 or conductive sheet 40 may be provided between the flat element 50 and the bottom 111 of the recessed container 11.

The flat element 50 is not limited to an all-solid-state battery including a solid electrolyte layer, and may be a non-aqueous electrolyte battery such as lithium-ion secondary battery, or any other flat battery, or may be a capacitor such as a lithium-ion capacitor.

### (Variation 1)

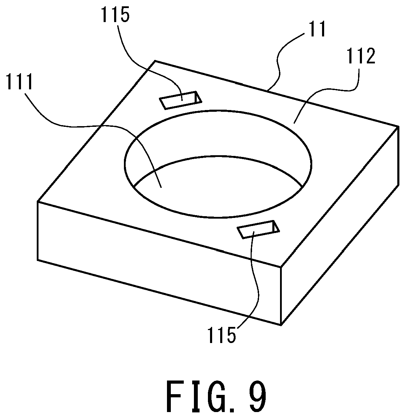

As shown in FIG. 9, a recessed container 11 of Variation 1 includes two insertion holes 115. In this implementation, two elastic locking portions 31 are provided on the conductive plate 30. Thus, in electrochemical devices 1 of various embodiments, the number of insertion holes 115 is not limited to any number, and it is only required that a plurality of insertion holes 115 be formed to allow a plurality of elastic locking portions 31 to be inserted therein.

### (Variation 2)

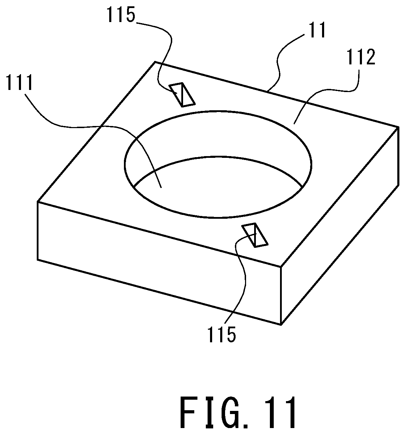

As shown in FIG. 10, the tip portion 311 of each elastic locking portion 31 may be bent in a circumferential direction, rather than in a radial direction, of the inner circumferential surface of the recessed container 11. As shown in FIG. 11, each insertion hole 115 in the upper end of the side wall 112 of the recessed container 11 is formed so as to allow an elastic locking portion 31 to be inserted therein and, after insertion of the elastic locking portion 31, enable the tip portion 311 to use the elastic force of the elastic locking portion 31 to press a side surface of the insertion hole 115. Thus, in electrochemical devices 1 of various embodiments, bending of the tip portion 311 is not limited to any particular direction, and may be bent outward in a radial direction of the recessed container 11, as discussed above.

### (Variation 3)

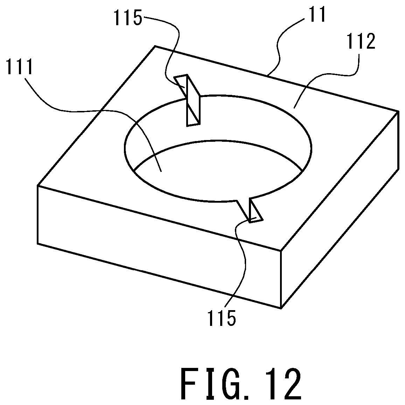

Variation 3 is a variation of the recessed container 11 of Variation 2 shown in FIG. 11. As shown in FIG. 12, insertion holes 115 open in the upper end surface of the recessed container 11 may communicate with the interior space of the recessed container 11. Specifically, the insertion holes 115 are notches extending from the upper end surface to the inner circumferential surface of the recessed container 11. Each insertion hole 115 has an opening in the upper end surface and inner circumferential surface of the recessed container 11. Each insertion hole 115 is only required to have an opening at least in the upper end surface of the recessed container 11 so as to allow the tip portion 311 of an elastic locking portion 31 to be inserted from above the recessed container 11. The tip portion 311 of an elastic locking portion 31 analogous in shape to the elastic locking portions 31 shown in FIG. 10 is inserted into an insertion hole 115 of Variation 3. Thus, in implementations with insertion holes 115 communicating with the interior space of the recessed container 11, too, the tip portions 311 of elastic locking portions 31 may be inserted therein such that the conductive plate 30 is mounted on and fixed to the recessed container 11.

### (Variation 4)

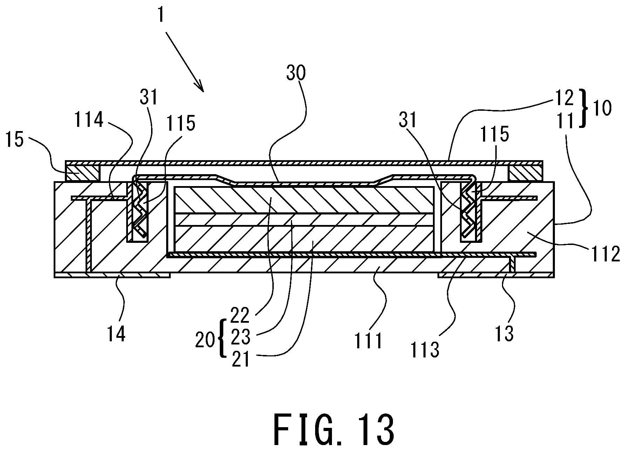

As shown in FIG. 13, in connection with electrochemical devices 1 of various embodiments, the conductive plate 30 may include elastic locking portions 31 shaped as a corrugated sheet. Each elastic locking portion 31 shaped as a corrugated sheet has a plurality of curved surfaces. When an elastic locking portion 31 is inserted into an insertion hole 115, the curved surfaces of the elastic locking portion 31 are pushed by a side surface of the insertion hole 115 and thus warped to extend in the direction of insertion. Thus, the curved surfaces of the elastic locking portion 31 use their elastic forces to press the side surface of the insertion hole 115 radially inward or radially outward. As a result, the conductive plate 30 can easily be fixed to the recessed container 11.

### (Variation 5)

Although not shown, the insertion holes 115 may be cuts in the upper end surface of the side wall 112. Specifically, an insertion hole 115 may be formed by making a cut and inserting an elastic locking portion 31 into the cut to widen it such that the hole has an opening in at least the upper end surface of the side wall 112. Thus, an insertion hole 115 may be a cut that allows an elastic locking portion 31 of the conductive plate 30 to be inserted therein from above the side wall 112 of the recessed container 11, or may communicate with the interior space of the recessed container 11, as discussed above.

### (Variation 6)

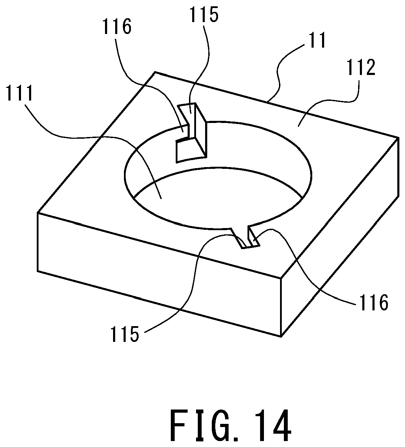

As shown in FIG. 14, in connection with electrochemical devices 1 of various embodiments, each insertion hole 115 in the side wall 112 of the recessed container 11 may be partially blocked by a support 116 so as to be able to block the bent tip portion 311 of an elastic locking portion 31 of the conductive plate 30. For each support 116, the tip portion 311 of an elastic locking portion 31 inserted in the associated insertion hole 115 can be locked to the lower surface of the support such that, even when a strong force is applied to the conductive plate 30, the elastic locking portion 31 is prevented from slipping out of the insertion hole 115. It will be understood that the recessed container 11 shown in FIG. 14 is a variation of the recessed container 11 shown in FIG. 12.

### (Other Variations)

According to the various embodiments, the electrode layer 21 functions as a cathode layer while the electrode layer 22 functions as an anode layer; alternatively, the electrode layer 21 may function as an anode layer while the electrode layer 22 may function as a cathode layer. In such implementations, the external terminal 13 functions as an anode terminal while the external terminal 14 functions as a cathode terminal.

In the above-illustrated fourth embodiment, the flat element 50 is housed in the interior space of the case 10 such that the exterior can 51 is located adjacent to the bottom 111 of the recessed container 11; alternatively, the flat element may be housed such that the seal can 52 is located adjacent to the bottom 111 of the recessed container 11. In other words, the flat element 50 may be housed in the interior space of the case 10 in such a manner that the flat element 50 shown in FIG. 8 has been flipped over.

In the above-illustrated embodiments, the power generation element 20 is constituted by a laminate having an electrode layer 21, electrode layer 22 and solid electrolyte layer 23 laminated together; alternatively, the solid electrolyte layer 23 may be replaced by a separator (not shown) to provide a separation layer, and an electrolytic solution, together with the power generation element 20, may be contained in the interior space of the case 10 such that the electrochemical device is implemented as a lithium-ion secondary battery, lithium-ion capacitor, or electric double-layer capacitor, for example. In such implementations, the separator and electrolytic solution may be ones typically used in lithium-ion secondary batteries, lithium-ion capacitors, or electric double-layer capacitors, for example. Further, the electrode layers 21 and 22 may be replaced by cathode and anode mixture layers typically used in various electrochemical devices 1.

It is also to be noted that the present invention will contribute to achieving some of the Sustainable Development Goals (SDGs) proposed by the United Nations: Goal 7, "affordable and clean energy"; and Goal 12, "responsible consumption and production".

### EXAMPLES

### [Evaluation of Vibration Resistance]

A conductive plate made of SUS304-CSP with a thickness of 0.2 mm was used in fabricating an electrochemical device (i.e., all-solid-state battery) shown in FIG. 6. Vibration testing was conducted on the electrochemical device of this inventive example to evaluate vibration resistance in the following manner.

The testing was conducted by applying sine-wave vibrations to the electrochemical device of the inventive example in three directions, namely, the length, width and height directions of the device in this order. A sweep with a sine wave was a logarithm sweep with varying frequency in a reciprocal manner in the range of 7 Hz to 200 Hz, where one cycle lasted 15 minutes, and such a sweep was repeated 12 times for each of the three directions. Sweeping was done such that peak acceleration was maintained at 1 G in the range of 7 Hz to 18 Hz; from 18 Hz onward, sweeping was done up to a frequency in which peak acceleration reached 8G (approximately 50 Hz) while maintaining the total amplitude at 0.8 mm; then, up to 200 Hz, sweeping was done such that peak acceleration was maintained at 1G.

The AC impedance of the electrochemical device of the inventive example after the vibration testing was measured at 1kHz with an applied voltage of 10 mV, and compared with the AC impedance measured before the vibration testing; no change was observed, demonstrating that good electrical connection was maintained by the conductive plate locked to the side wall of the recessed container.

### [Evaluation of Sealability]

Separate from the vibration-resistance tests, the sealability of the cases of the electrochemical devices of the examples was determined by the "method for helium leak testing" (i.e., bombing method) in accordance with JIS-Z2331. An electrochemical device was placed in a tank and pressurized with helium gas for two hours; the electrochemical device was then placed in a vacuum chamber and surrounding areas were evacuated for one minute and the amount of leaked helium gas was determined: the amount of leaked gas after 10 minutes was not larger than 1×10⁻¹⁰Pa·m³/s, which demonstrates good sealability.

Although embodiments have been described, the present disclosure is not limited to the above-described embodiments; one or more of the above-described embodiments and variations may be combined, and various modifications are possible without departing from the spirit of the disclosure.

### REFERENCE SIGNS LIST

1: electrochemical device
10: case
11: recessed container
12: cap
13: external terminal
14: external terminal
15: seal ring
111: bottom
112: side wall
113: conductor
114: conductor
115: insertion holes
116: supports
20: power generation element
30: conductive plate
31: elastic locking portions
311: tip portion
32: planar bottom portion
33: stepped portion
34: spring piece
40: conductive sheet
50: flat element
51: exterior can
511: flat portion
52: seal can
521: flat portion
53: gasket

## Claims

1. An electrochemical device comprising:
a case including a recessed container having a bottom and a side wall, and a cap adapted to cover an opening of the recessed container;
a power generation element sealed in the case and including a first electrode layer located adjacent to the bottom, a second electrode layer located adjacent to the cap, and a separation layer located between the first electrode layer and the second electrode layer; and
a conductive plate positioned between the power generation element and the cap,
wherein:
the first electrode layer is electrically connected to a first conductive path running from an inside of the case to an outside of the case;
the second electrode layer is electrically connected, via the conductive plate, to a second conductive path running from the inside of the case to the outside of the case;
the recessed container has an insertion hole with an opening in an upper end surface of the side wall;
the conductive plate has an elastic locking portion extending from an edge of the conductive plate to be inserted into the insertion hole to allow the conductive plate to be mounted on the recessed container; and
the elastic locking portion inserted into the insertion hole presses a side surface of the insertion hole.

2. The electrochemical device according to claim 1, wherein the elastic locking portion has a tip portion sharply bent back to extend in a direction opposite to a direction of insertion into the insertion hole.

3. The electrochemical device according to claim 1, wherein the elastic locking portion is shaped as a corrugated sheet.

4. The electrochemical device according to any one of claims 1 to 3,
wherein a clearance is formed between the conductive plate and the cap.

5. An electrochemical device comprising:
a case including a recessed container having a bottom and a side wall, and a cap adapted to cover an opening of the recessed container;
a flat element sealed in the case and including an exterior member having a first electrode terminal located adjacent to the bottom and a second electrode terminal located adjacent to the cap, and a power generation element encapsulated in an interior of the exterior member and having a first electrode layer, a second electrode layer and a separation layer located between the first electrode layer and the second electrode layer; and
a conductive plate positioned between the flat element and the cap,
wherein:
the first electrode terminal is electrically connected to a first conductive path running from an inside of the case to an outside of the case;
the second electrode terminal is electrically connected, via the conductive plate, to a second conductive path running from the inside of the case to the outside of the case;
the recessed container has an insertion hole with an opening in an upper end surface of the side wall;
the conductive plate has an elastic locking portion extending from an edge of the conductive plate to be inserted into the insertion hole to allow the conductive plate to be mounted on the recessed container; and
the elastic locking portion inserted in the insertion hole presses a side surface of the insertion hole.
